Europäisches Patentamt

European Patent Office

Office européen des brevets

(11) Numéro de publication: **0 271 381**
**B1**

# (12) FASCICULE DE BREVET EUROPEEN

(45) Date de publication du fascicule du brevet:
27.12.90

(51) Int. Cl.⁵: **B60B 7/06**

(21) Numéro de dépôt: **87402546.3**

(22) Date de dépôt: **10.11.87**

(54) Dispositif de fixation amovible d'un enjoliveur sur une roue de véhicule et assemblage obtenu à l'aide de ce dispositif.

(30) Priorité: **14.11.86 FR 8615881**

(43) Date de publication de la demande:
**15.06.88 Bulletin 88/24**

(45) Mention de la délivrance du brevet:
**27.12.90 Bulletin 90/52**

(84) Etats contractants désignés:
**AT BE CH DE ES GB IT LI LU NL SE**

(56) Documents cités:
**EP-A- 0 149 935**
**DE-U- 8 534 757**
**DE-U- 8 702 166**
**FR-A- 1 081 492**
**US-A- 2 736 610**
**US-A- 3 416 840**

(73) Titulaire: **RAPID S.A., 251 Boulevard Péreire,
F-75852 Paris Cédex 17(FR)**

(72) Inventeur: **Dubost, Dominique Michel Louis,
53 Résidence Elysées II, F-78170 La Celle Saint
Cloud(FR)**

(74) Mandataire: **Durand, Yves Armand Louis et al, Cabinet Z.
Weinstein 20, Avenue de Friedland, F-75008 Paris(FR)**

EP 0 271 381 B1

## Description

On a décrit dans le document FR-A 2 558 418 un dispositif de fixation amovible d'un enjoliveur de roue comprenant essentiellement une couronne élastiquement déformable et indépendante qui peut être clippée dans un redan annulaire de la jante de roue et sur laquelle on clippe l'enjoliveur, ladite couronne comportant une lèvre annulaire externe mince qui se clippe dans le redan et qui est plus élastique que la partie restante ou âme de la couronne, pour former avec cette âme une rainure annulaire présentant en section transversale sensiblement la forme d'un V, conformément au préambule de la revendication 1.

Or on a remarqué qu'un tel dispositif présentait certaines difficultés de montage, notamment au niveau du clippage de la couronne dans le redan de la jante de roue. De plus, un tel dispositif ne possède pas toujours une bonne aptitude à permettre la reprise des dispersions géométriques de la jante de roue.

Aussi, la présente invention a pour but de remédier à ces inconvénients en proposant un dispositif de fixation du genre ci-dessus et qui est caractérisé en ce que l'enjoliveur est clippé sur l'âne de la couronne par des attaches sensiblement en forme de U à branches élastiques dont l'une comporte une languette ou analogue faisant saillie à l'intérieur du U et s'accrochant dans une nervure faisant elle-même saillie de l'âme de la couronne qui est interrompue pour former deux extrémités libres réunies par un moyen élastiquement déformable.

On comprend donc que tant l'interruption de la couronne que la fixation de l'enjoliveur par des attaches en U clippées sur l'âme de ladite couronne, conféreront au dispositif selon cette invention toutes les qualités requises pour permettre un clippage efficace de la couronne dans le redan de la jante de roue et de l'enjoliveur sur cette couronne, et cela tout en assurant un rattrapage des dispersions géométriques éventuelles de la jante et de l'enjoliveur.

Suivant une autre caractéristique de l'invention, le moyen élastiquement déformable précité est un fil métallique permettant la déformation radiale de la couronne et qui présente sensiblement la forme d'un U situé dans un plan sensiblement perpendiculaire à l'âme de la couronne et dont les branches sont accrochées dans les extrémités libres de ladite couronne.

La base du U constituant ce fil métallique est située du côté de l'enjoliveur.

Quant aux attaches en forme de U reliant l'enjoliveur à la couronne, elles sont ancrées par leur base dans des logements faisant saillie de la face interne de l'enjoliveur.

Suivant encore une autre caractéristique du dispositif selon cette invention, des entretoises sont solidaires de l'enjoliveur et viennent en butée sur l'âme de la couronne, lorsque l'enjoliveur est en position montée.

Mais d'autres caractéristiques et avantages de l'invention apparaîtront mieux dans la description détaillée qui suit et se réfère aux dessins annexés, donnés uniquement à titre d'exemple, et dans lesquels ;

La figure 1 est une vue partiellement en coupe axiale, avec arrachements , d'une roue de véhicule sur laquelle est monté un enjoliveur par l'intermédiaire d'une couronne vue en coupe suivant la ligne I-I de la figure 2 ;

La figure 2 est une vue en plan de dessus de la couronne avec l'enjoliveur clippé sur elle ;

La figure 3 est une vue en coupe montrant à plus grande échelle les moyens de fixation de l'enjoliveur sur la roue ; et

La figure 4 est une vue, suivant la flèche IV de la figure 2, des moyens prévus au niveau de l'interruption de la couronne.

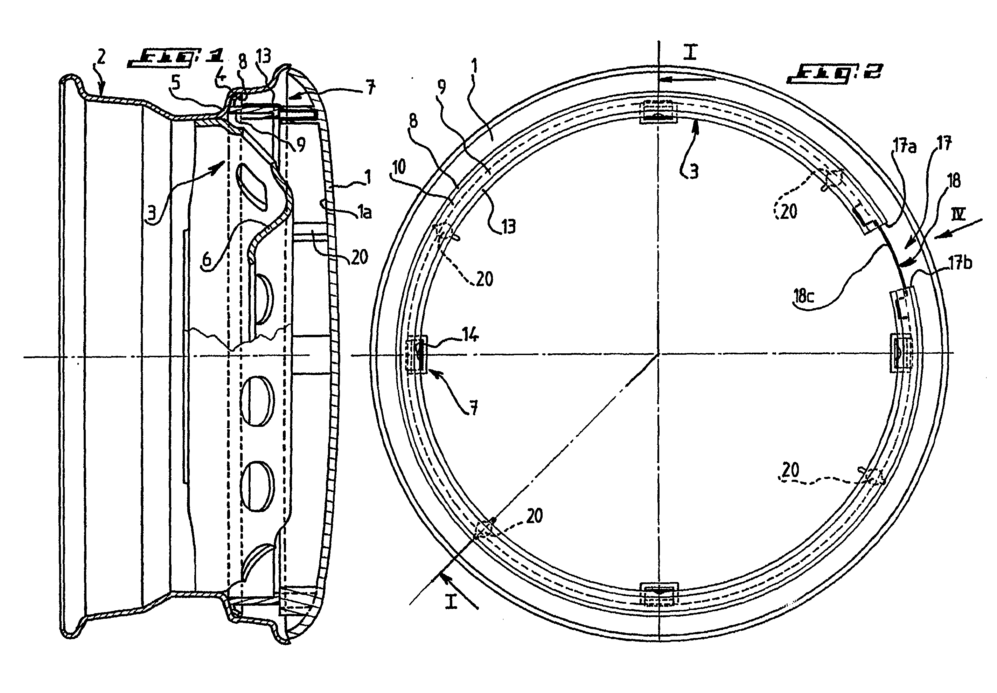

En se reportant aux figures 1 à 3, on voit un dispositif de fixation amovible d'un enjoliveur 1 sur une roue 2, ce dispositif comprenant essentiellement une couronne élastiquement déformable et indépendante 3 clippée dans un redan annulaire 4 de la jante 5 de la roue 2, dont on a montré en 6 le voile.

Des attaches 7 sont clippées d'une part sur la couronne 3 et d'autre part sur la face interne 1a de l'enjoliveur 1, de façon à assurer la liaison entre ces deux éléments.

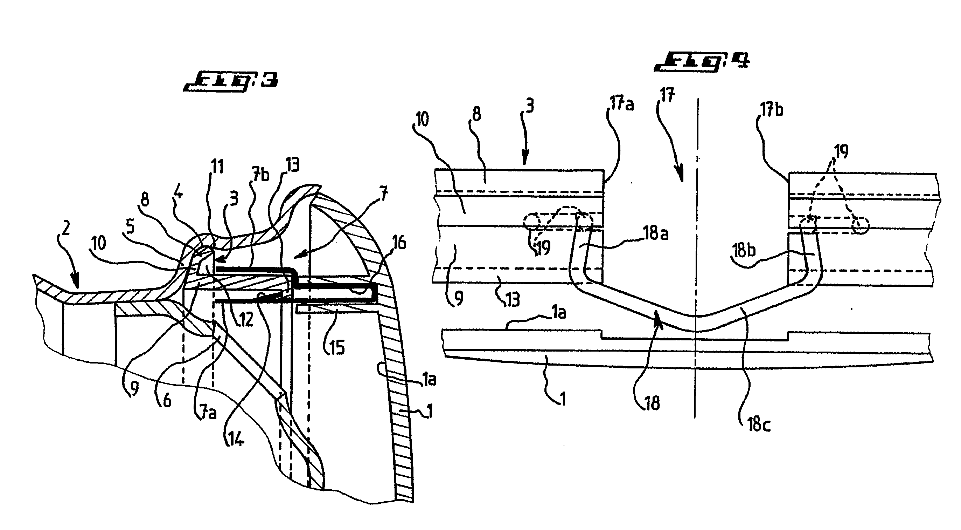

La couronne indépendante et élastique 3 est de préférence réalisée en matière synthétique et comporte, comme on le voit mieux sur la figure 3, une lèvre annulaire externe 8 qui est relativement mince et plus élastique que la partie restante ou âme 9 de la couronne 3 afin de permettre le clippage de cette dernière dans le redan 4 de la jante 5.

La lèvre 8 est reliée à l'âme 9 par un voile de matière 10 qui fait face à la jante 5 de la roue lorsque la couronne 3 est en position montée, comme on le voit sur les figures 1 et 3. En outre, la lèvre 8 présente un bord libre 11 qui est écarté de l'âme 9 de façon à former avec cette âme une rainure annulaire 12 qui présente en section transversale sensiblement la forme d'un V.

Conformément à la présente invention, l'âme 9 de la couronne 3 comporte une nervure annulaire 13 venant de matière avec ladite âme et s'étendant sensiblement perpendiculairement à celle-ci vers l'intérieur de la couronne.

Ainsi, comme on peut le comprendre en se reportant à la figure 3, la couronne 3 présente en section transversale sensiblement la forme d'un S dont l'une des extrémités est constituée par la lèvre 8 et dont l'autre extrémité est constituée par la nervure 13.

Les attaches 7, conformément à la présente invention, présentent chacune sensiblement la forme d'un U à deux branches élastiques 7a, 7b, dont l'une 7a comporte une languette 14 tournée vers l'intérieur du U et venant s'accrocher par clippage sur la nervure annulaire 13 de la couronne 3, comme on le voit bien sur la figure 3.

Les branches 7a, 7b des attaches 7 forment, du côté de la base du U un prolongement 16 comportant des dents, griffes ou analogues, de sorte que le prolongement 16 peut s'accrocher dans des logements 15 venant de moulage avec la face interne 1a de l'enjoliveur 1.

On comprend donc que l'enjoliveur 1 sera positivement accroché par les languettes 14 sur l'âme 9 de la couronne 3, tout en permettant de légers mouvements de rotation de la couronne par rapport à l'enjoliveur ou l'inverse, afin de rattraper les dispersions géométriques, puisque les attaches 7 pourront en quelque sorte tourner sur ladite couronne.

Comme cela est bien visible sur les figures 2 et 4, la couronne 3 est interrompue en 17 pour former deux extrémités libres 17a, 17b qui sont réunies par un moyen élastiquement déformable lequel, suivant l'exemple de réalisation représenté, revêt la forme d'un simple fil métallique 18.

Ce fil présente grossièrement la forme d'un U accroché par ses branches 18a, 18b respectivement dans les extrémités libres 17a, 17b de la couronne 3. A cet effet, les extrémités libres 17a, 17b peuvent comporter des orifices 19 dans lesquels sont crochetées les extrémités des branches 18a, 18b de l'élément ou fil élastique 18.

Cet élément élastique 18 permet par conséquent à la couronne 3 de se déformer radialement vers l'intérieur ou vers l'extérieur de sorte que ladite couronne pourra se clipper efficacement dans le redan 4 de la jante 5 de roue 2, ladite couronne conservant sa planéïté et ne risquant pas de provoquer des contraintes sur l'enjoliveur 1.

Comme on le voit sur la figure 4, la base 18c du V constituant l'élément élastique 18 est située du côté de la face interne 1a de l'enjoliveur 1, de sorte qu'en saisissant la base 18c du V, on provoquera le rapprochement des extrémités libres 17a, 17b de la couronne 3, ce qui facilitera son déclippage du redan 4 de la jante de roue.

On a montré en 20 sur les figures 1 et 2 des entretoises venant de matière avec la face interne 1a de l'enjoliveur et sur lesquelles viennent buter l'âme 9 de la couronne 3 de façon à rigidifier l'ensemble couronne-enjoliveur.

On a donc réalisé suivant l'invention un dispositif de fixation fiable et sûr d'un enjoliveur grâce à une couronne qui, à l'état libre, peut présenter un développé plus important qu'en position montée dans le redan d'une jante de roue, et grâce à des attaches en U verrouillées sur l'âme de la couronne qui est plus épaisse que la lèvre permettant le clippage de la couronne dans le redan de la jante de roue.

Bien entendu, l'invention n'est nullement limitée au mode de réalisation décrit et illustré qui n'a été donné qu'à titre d'exemple.

## Revendications

1. Dispositif de fixation amovible d'un enjoliveur de roue, du type comprenant une couronne (3) élastiquement déformable et indépendante clippée dans un redan annulaire (4) de la jante (5) de roue (2) et sur laquelle est clippé l'enjoliveur (1), ladite couronne comportant une lèvre annulaire externe (8) mince et plus élastique que la partie restante ou âme (9) de la couronne, pour former avec cette âme une rainure annulaire (12) présentant en section transversale sensiblement la forme d'un V, caractérisé en ce que l'enjoliveur (1) est clippé sur l'âme (9) de la couronne (3) par des attaches (7) sensiblement en forme de U à branches élastiques (7a, 7b) dont l'une (7a) comporte une languette ou analogue (14) faisant saillie à l'intérieur du U et s'accrochant dans une nervure (13) faisant saillie de l'âme (9) de la couronne (3) qui est interrompue (17) pour former deux extrémités libres (17a, 17b) réunies par un moyen élastiquement déformable.

2. Dispositif selon la revendication 1, caractérisé en ce que le moyen élastiquement déformable précité est un fil métallique (18) permettant la déformation radiale de la couronne (3) et qui présente sensiblement la forme d'un U situé dans un plan sensiblement perpendiculaire à l'âme (9) de la couronne et dont les branches sont accrochées dans les extrémités libres (17a, 17b) de ladite couronne.

3. Dispositif selon la revendication 2, caractérisé en ce que la base (18c) du U formant le fil métallique précité est située du côté de l'enjoliveur (1).

4. Dispositif selon la revendication 1, caractérisé en ce que les attaches précitées (7) en forme de U sont ancrées par leur base (16) dans des logements (15) faisant saillie de la face interne (1a) de l'enjoliveur (1).

5. Dispositif selon l'une des revendications 1 à 4, caractérisé par des entretoises (20) solidaires de l'enjoliveur (1) et venant en butée sur l'âme (9) de la couronne (3).

6. Assemblage formé par un enjoliveur et une roue de véhicule, caractérisé en ce qu'il est réalisé à l'aide du dispositif selon l'une des revendications 1 à 5.

## Claims

1. Device for the removable fastening of an ornamental cap for a wheel, of the type comprising an elastically deformable and independent ring (3) clipped in an annular step (4) of the rim (5) of the wheel (2) and on which is clipped the ornamental cap (1), the said ring comprising a thin outer annular lip (8) which is more elastic than the remaining part or web (9) of the ring to form with this web an annular groove (12) exhibiting in cross-section substantially the shape of a V, characterized in that the ornamental cap (1) is clipped onto the web (9) of the ring (3) by substantially U-shaped fastenings (7) with elastic legs (7a, 7b) one (7a) of which comprises a tab or the like (14) projecting inside of the U and hooking onto a rib (13) protruding from the web (9) of the ring (3) which is interrupted (17) to form two free ends (17a, 17b) joined together by an elastically deformable means.

2. Device according to claim 1, characterized in that the aforesaid elastically deformable means is a wire (18) permitting the radial deformation of the ring (3) and which exhibits substantially the shape of a U located in a plane substantially perpendicular to the web (9) of the ring and the legs of which are hooked into the free ends (17a, 17b) of the said ring.

3. Device according to claim 2, characterized in that the base (18c) of the U forming the aforesaid wire is located on the ornamental cap (1) side.

4. Device according to claim 1, characterized in that the aforesaid U-shaped fastenings (7) are anchored with their base (16) within housings (15) protruding from the internal face (1a) of the ornamental cap (1).

5. Device according to one of claims 1 to 4, characterized by crossbars (20) made fast with the ornamental cap (1) and abutting against the web (9) of the ring (3).

6. Assembly formed of an ornamental cap and a vehicle wheel, characterized in that it is carried out by means of a device according to one of the claims 1 to 5.

**Patentansprüche**

1. Vorrichtung zur lösbaren Befestigung einer Radzierkappe, derjenigen Gattung, die einen in einem ringförmigen Absatz (4) der Felge (5) des Rads (2) eingeklemmten, elastisch verformbaren und unabhängigen Kranz (3) aufweist und an welchem die Zierkappe (1) eingeklemmt ist, wobei der besagte Kranz eine dünne ringförmige Aussenleiste (8) aufweist, die elastischer als der übrigbleibende Teil oder Steg (9) des Kranzes ist, um mit diesem Steg eine, im Querschnitt eine etwa V-förmige Gestalt aufweisende, ringförmige Nut (12) zu bilden, dadurch gekennzeichnet, dass die Zierkappe (1) an dem Steg (9) des Kranzes (3) mit im wesentlichen U-förmige, elastische Schenkel (7a, 7b) aufweisenden Verbindungsstücken (7) eingeklemmt ist, wobei einer (7a) der Schenkel einen im inneren des U's hervorstehenden Dorn oder dergleichen (14) aufweist, der sich an einer vom Steg (9) des Kranzes (3) hervorstehenden Rippe (13) festhakt, welcher Kranz unterbrochen (17) ist, um zwei, durch ein elastisch verformbares Mittel verbundene freie Enden (17a, 17b) zu bilden.

2. Vorrichtung nach Anspruch 1, dadurch gekennzeichnet, dass das vorgenannte elastisch verformbare Mittel eine die radial Verformung des Kranzes (3) gestattender Metaldraht (18) ist, der im wesentlichen die Gestalt eines in einer zum Steg des Kranzes etwa senkrechten Ebene liegenden U's aufweist, dessen Schenkel in den freien Enden (17a, 17b) des besagten Kranzes festgehakt sind.

3. Vorrichtung nach Anspruch 2, dadurch gekennzeichnet, dass der Fuss (18c) des den vorgenannten Metalldraht bildenden U's auf der Seite zur Zierkappe (1) hin liegt.

4. Vorrichtung nach Anspruch 1, dadurch gekennzeichnet, dass die vorgenannten U-förmigen Verbindungsstücke (7) mit ihrem Fuss (16) in von der Innenseite (1a) der Zierkappe (1) herausragenden Aussparungen (15) verankert sind.

5. Vorrichtung nach einem der Ansprüche 1 bis 4, gekennzeichnet durch mit der Zierkappe (1) einstückige Streben (20) die gegen den Steg (9) des Kranzes (3) stossen.

6. Durch eine Zierkappe und ein Fahrzeugrad gebildeter Zusammenbau, dadurch gekennzeichnet, dass er mit Hilfe der Vorrichtung gemäss einem der Ansprüche 1 bis 6 durchgeführt wird.

EP 0 271 381 B1

Fig.4

Fig.3